Europäisches Patentamt

European Patent Office

Office européen des brevets

(19)

(11) **EP 1 403 693 A1**

(12) **EUROPÄISCHE PATENTANMELDUNG**

(43) Veröffentlichungstag:
31.03.2004 Patentblatt 2004/14

(51) Int Cl.⁷: **G03B 1/14**, G03D 3/13

(21) Anmeldenummer: 02021169.4

(22) Anmeldetag: 24.09.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **Agfa-Gevaert AG**
**51373 Leverkusen (DE)**

(72) Erfinder:
• **Kastner, Franz**
**81827 München (DE)**
• **Seeberg, Axel**
**85417 Marzling (DE)**

(54) **Anordnung zum Bestimmen des Antriebsverhaltens eines Transportsystems für ein fotografisches Material sowie Verfahren hierzu**

(57) Die Erfindung betrifft eine Anordnung und ein Verfahren zum Bestimmen des Antriebsverhaltens eines Transportsystems für ein fotografisches Material, insbesondere für einen entwickelten Film, in einer Verarbeitungsstation anhand einer als Referenz dienende Transportstrecke (b+x) zwischen zwei in Transportrichtung (T) des fotografischen Materials (12) aufeinanderfolgend angeordneten Sensoren (18, 24), an denen zum Erfassen eines Referenzmerkmales (32, 34) das fotografischen Material (12) vorbeigeführt wird. Zum Bestimmen der Transportstrecke (b +x) ist für einen der beiden Sensoren (24) mindestens ein unter einem vorgegebenen Winkel ($\alpha$) zur Transportrichtung (T) verlaufender Kalibrierspalt (26) vorgesehen, der den diesem zugeordneten Sensor (24) abschnittsweise freiläßt und einen definierten Abstand (b) zum anderen Sensor (18) besitzt. Der von dem Kalibrierspalt (26) freigelassene Abschnitt (P) des Sensors (24) gibt dabei die relative Lage (x) des Sensors (24) zum Kalibrierspalt (26) in Transportrichtung (T) an, wobei die relative Lage (x) des Sensors (24) zum Kalibrierspalt (26) gemeinsam mit dem Abstand (b) des Kalibrierspaltes (26) zum anderen Sensor (18) die als Referenz dienende Transportstrecke (b+x) definiert.

Fig.

EP 1 403 693 A1

**Beschreibung**

Die Erfindung betrifft eine Anordnung gemäß dem Oberbegriff des Anspruchs 1 zum Bestimmen des Antriebsverhaltens eines Transportsystems für ein fotografisches Material, insbesondere für einen entwickelten Film, in einer Verarbeitungsstation. Ferner betrifft die Erfindung ein Verfahren nach dem Oberbegriff des Anspruchs 9 zum Bestimmen des Antriebsverhaltens eines derartigen Transportsystems.

Bei der Verarbeitung fotografischen Materials wird das fotografische Material in vielen Fällen intermittierend durch die betreffende Verarbeitungsstation transportiert, wobei der Transport des fotografischen Materials in Abhängigkeit von am fotografischen Material ausgebildeten Merkmalen oder Merkmalen des Bildinhalts, wie Dichtesprüngen, definiert bezüglich der Verarbeitungseinheit in der Verarbeitungsstation mit hoher Präzision angehalten werden muß. So wird in einer Abtaststation mit Flächensensor das fotografische Material, ein belichteter entwickelter Negativfilm mit Bildvorlagen, während seines Transportes so angehalten, dass die jeweils abzutastende Bildvorlage bezüglich der Abtasteinheit der Abtaststation beim Abtasten in einer definierten Lage kurzfristig ruht, bis der Abtastvorgang abgeschlossen ist. In gleicher Weise müssen in einer Aufbelichtungsstation, in der auf einem entwickelten Negativfilm enthaltende Bildvorlagen auf ein üblicherweise bandförmiges Fotopapier aufbelichtet werden, beide fotografischen Materialien, sowohl der Negativfilm als auch das bandförmige Fotopapier, in definierter Weise intermittierend durch die Aufbelichtungseinheit der Aufbelichtungsstation transportiert werden, wobei sichergestellt sein muß, dass sowohl der Negativfilm als auch das Fotopapier synchronisiert zueinander und relativ zur Aufbelichtungseinheit jeweils kurzfristig angehalten werden. Auch wenn ein Film geschnitten oder genotched wird, muss der Film präzise an der zu schneidenden oder zu notchenden Position (z. B. der Mitte eines Bildes oder Bildzwischenraumes) angehalten werden.

Damit derart exakte Positionierungen des zu transportierenden Materials in einem Transportsystem vorgenommen werden können, muss exakt bekannt sein, welche absolute Materiallänge bei einer bestimmten Anzahl von Transportschritten transportiert wurde

Das Antriebsverhalten des Transportsystems wird für den zuvor beschriebenen intermittierenden Transport entsprechend der jeweils zu fördernden Materiallänge, beispielsweise die für jede zu fördernde Materiallänge notwendige Anzahl an Schrittimpulsen für einen Schrittmotor, vorgegeben. Um die für das Antriebsverhalten des Transportsystems erforderlichen Informationen, wie die für eine vorgegebene, zu transportierende Materiallänge erforderliche Anzahl an Schrittimpulsen für einen Schrittmotor, ermitteln zu können, sind im Stand der Technik verschiedene Möglichkeiten bekannt.

So wird als Masterband ein speziell perforiertes Leaderband mit Hilfe des Transportsystems durch die Verarbeitungsstation gefördert, wobei durch Erfassen der in bekanntem Abstand zueinander befindlichen Perforationen am Leaderband die entsprechend dem Antriebsverhalten des Transportsystems jeweils in einem Transportschritt geförderte Materiallänge bestimmt wird.

Des Weiteren ist bekannt, das Antriebsverhalten des Transportsystems während der Verarbeitung zu überwachen, in dem die beispielsweise am Negativfilm bereits vorgesehenen Perforationen oder nachträglich am Negativfilm eingestanzte Kerben (Notches) erfasst werden.

Allerdings besteht das Problem, dass durch auftretenden Schlupf und durch unregelmäßige Abstände von Perforationen und Notches des fotografischen Materials die durch das vorgegebene Antriebsverhalten des Transportsystems sich theoretisch ergebende, transportierte Materiallänge von der tatsächlich transportierten Materiallänge abweicht, so dass das fotografische Material in seiner Längsrichtung betrachtet nicht ordnungsgemäß zur Verarbeitungseinheit in der Verarbeitungsstation positioniert ist.

Um dies zu vermeiden, ist aus der DE 38 33 731 C2 eine Anordnung und ein Verfahren bekannt, bei der bzw. bei dem mit Hilfe zweier in Transportrichtung aufeinanderfolgend angeordneter Sensoren ein am fotografischen Material ausgebildetes Referenzmerkmal, beispielsweise eine Klebestelle zwischen zwei miteinander verklebten Filmabschnitten, erfasst und basierend auf der durch den Abstand der beiden Sensoren definierten Referenzstrecke das Antriebsverhalten des Transportsystems an die tatsächlich transportierte Materiallänge angepasst wird. Diese Anordnung hat sich zwar durchaus als praktikabel erwiesen. Allerdings setzt dieses bekannte Verfahren voraus, dass der Abstand zwischen den beiden Sensoren bekannt ist und die Sensoren präzise in den vorgegebenen Positionen verbleiben. Jede Dejustage der Sensoren, beispielsweise bei Wartungsarbeiten, führt zu einer Abweichung zwischen der theoretisch transportierten Materiallänge, die von den Sensoren erfasst wurde, und der tatsächlich transportierten Materiallänge.

Es ist Aufgabe der Erfindung, die eingangs genannte Anordnung bzw. das eingangs genannte Verfahren so weiterzubilden, dass eine Bestimmung des Antriebsverhaltens des Transportsystems anhand einer als Referenz dienenden Transportstrecke mit hoher Präzision möglich ist.

Die Erfindung löst die Aufgabe durch eine Anordnung mit den Merkmalen nach Anspruch 1. Ferner löst die Erfindung die Aufgabe durch ein Verfahren mit den Merkmalen nach Anspruch 9.

Bei der erfindungsgemäßen Anordnung wird das fotografische Material an zwei aufeinanderfolgend angeordneten Sensoren, deren Abstand zueinander die als Referenz für die Bestimmung des Antriebsverhaltens des Transportsystems dienende Transportstrecke definiert, vorbeigeführt und ein am fotografischen Material ausgebildetes Referenzmerkmal erfasst. Zur exakten Bestimmung des Abstandes zwischen den Sensoren ist für einen der beiden Sensoren ein Kalibrierspalt vorgesehen, der unter einem vorgegebenen Winkel zur Transportrichtung des fotografischen Materials verläuft und einen vorgegebenen Abstand zum anderen Sensor besitzt. Der Kalibrierspalt ist dabei so bemessen, dass der am Kalibrierspalt angeordnete Sensor nur abschnittsweise freigelassen ist. Wird nun die Lage des Sensors relativ zum Kalibrierspalt beispielsweise bei Wartungsarbeiten verändert, wird ein anderer Abschnitt des Sensors freigegeben, während der zuvor freigelassene Abschnitt abgedeckt ist. Anhand des nun freigegebenen Abschnittes des Sensors läßt sich die Position des Sensors entlang des unter einem Winkel verlaufenden Kalibrierspaltes und damit die Lage des Sensors relativ zum Kalibrierspalt in Transportrichtung gesehen eindeutig bestimmen. Durch einfaches Addieren der relativen Lage des Sensors zum Kalibrierspalt mit dem bekannten Abstand des Kalibrierspaltes zum anderen Sensor lässt sich wiederum die tatsächliche Transportstrecke zwischen den beiden Sensoren sehr präzise ermitteln, auf deren Grundlage das Arbeitsverhalten des Transportsystems nun exakt bestimmt werden kann.

Damit die Sensoren unterschiedliche Breitenformate des fotografischen Materials erfassen können, ist es von Vorteil, wenn sich beide Sensoren zumindest annähernd über die gesamte Breite des Transportweges erstrecken.

Um ein möglichst exakte Bestimmung des Abstandes zwischen den Sensoren vornehmen zu können, ist es ferner von Vorteil, wenn ein zweiter Kalibrierspalt vorgesehen ist, an dem die relative Lage des Sensors zusätzlich bestimmt werden kann. Der Kalibrierspalt ist dabei vorzugsweise spiegelsymmetrisch bezüglich der Mitte des Transportweges zum ersten Kalibrierspalt ausgebildet, so dass eine vergleichbare Lagebestimmung des Sensors zu den beiden Kalibrierspalten möglich sind.

Bei einer bevorzugten Ausführungsform der erfindungsgemäßen Anordnung ist der Kalibrierspalt bzw. sind die Kalibrierspalte an einer lichtundurchlässigen Auflage für das fotografische Material ausgebildet, so dass eventuell auftretendes Streulicht, das den zu kalibrierenden Sensor beeinflussen könnte, vermieden und somit eine sehr präzise Lagebestimmung des Sensors zum Kalibrierspalt möglich ist.

Des weiteren wird bei einer bevorzugten Ausführungsform der erfindungsgemäßen Anordnung vorgeschlagen, für jeden der beiden Sensoren einen quer zur Transportrichtung des fotografischen Materials verlaufenden Messspalt an der als Transportweg dienenden lichtundurchlässigen Auflage für das fotografische Material auszubilden, damit die Sensoren die das am fotografischen Material ausgebildete Referenzmerkmal eindeutig bestimmen können.

Bei einer Weiterbildung dieser Ausführungsform ist einer der Messspalte in Transportrichtung des fotografischen Materials gesehen auf Höhe des Kalibrierspaltes bzw. der Kalibrierspalte ausgebildet und erstreckt sich in seiner Breite über den vom Kalibrierspalt bzw. den Kalibrierspalten in Transportrichtung abgedeckten Bereich. Hierdurch ist sichergestellt, dass der Sensor in jeder zulässigen Lage relativ zum Kalibrierspalt das fotografische Material überwachen kann.

Als Sensoren werden vorzugsweise CCD-Zeilen aus mehreren CCD-Elementen eingesetzt, die sich über die gesamte Breite des Transportweges erstrecken, wobei gegenüber jeder CCD-Zeile eine Beleuchtungseinheit angeordnet ist, zwischen der und der dieser jeweils zugeordneten CCD-Zeile das fotografische Material hindurchzuführen ist. Die Verwendung von CCD-Zeilen hat verschiedene Vorteile. Zum einen ist eine sehr präzise Bestimmung der relativen Lage des einen Sensors zu dem mindestens einen Kalibrierspalt möglich, insbesondere bei sehr hoch auflösenden CCD-Zeilen. Um die relative Lage des Sensors zum Kalibrierspaltes zu bestimmen, muß der Sensor lediglich belichtet werden, wobei das CCD-Element, das nicht vom Kalibrierspalt abgedeckt ist, ermittelt und damit die relative Lage des Sensors zum Kalibrierspalt eindeutig erfasst werden kann. Zum anderen kann die Lage des Referenzmerkmales bei der Verwendung von CCD-Zeilen als Sensoren, die zum Erfassen des Referenzmerkmals beim Vorbeiführen des fotografischen Materials beleuchtet werden, sehr schnell und sicher durch die von den CCD-Elementen eindeutig zu unterscheidenden Helligkeitsunterschiede bestimmt werden.

Als Referenzmerkmal dient vorzugsweise eine Klebestelle zwischen zwei aneinandergeklebten Abschnitten des Materials oder eine Kerbe, wodurch sich eine sichere Bestimmung des eindeutig definierten Referenzmerkmales ergibt.

Gemäß einem weiteren Aspekt betrifft die Erfindung ein Verfahren zum Bestimmen des Antriebsverhaltens des Transportsystems für das fotografische Material in einer Verarbeitungsstation, bei dem unter Verwendung der zuvor beschriebenen Anordnung aus Sensoren und einem an einem der Sensoren vorgesehenen Kalibrierspalt eine präzise Längenbestimmung der als Referenz dienenden Transportstrecke möglich ist.

Bei einer besonders bevorzugten Variante dieses erfindungsgemäßen Verfahrens wird vorgeschlagen, zum Bestimmen der relativen Position des Sensors zum Kalibrierspalt zunächst den vom Kalibrierspalt unbedeckten Abschnitt des Sensors zu erfassen und anschließend den Abstand des erfassten unbedeckten Abschnittes des Sensors bezogen auf einen vorgegebenen Referenzpunkt zu bestimmen. Basierend auf dem vorgegebenen Winkel, mit dem der Kalibrierspalt zur Transportrichtung verläuft, kann beispielsweise unter Anwendung trigonometrischer Funktionen die relative Lage des Sensors in Transportrichtung bezogen auf den Referenzpunkt präzise berechnet wird. Der Referenzpunkt wird bei dieser Verfahrensvariante vorzugsweise durch eines der beiden Enden des Kalibrierspaltes definiert.

Um die Präzision bei der Lagebestimmung des Sensors, insbesondere über die gesamte Breite des Transportweges, weiter zu erhöhen, ist es zusätzlich von Vorteil, einen zweiten Kalibrierspalt vorzusehen, welcher in Transportrichtung gesehen auf Höhe des ersten Kalibrierspalte angeordnet ist und an dem gemeinsam mit dem ersten Kalibrierspalt die relative Lage des Sensors zum Referenzpunkt bestimmt wird.

Bei einer besonders bevorzugten Verfahrensvariante wird die Verwendung einer CCD-Zeile als Sensor vorgeschlagen, wobei zum Bestimmen der relativen Lage der CCD-Zeile zum Referenzpunkt die CCD-Zeile durch den Kalibrierspalt bzw. durch die Kalibrierspalte belichtet wird. Der Belichtungsvorgang erfolgt insbesondere dann, wenn kein Material an dem Sensor vorbeigeführt wird, um eine möglichst genau Lagebestimmung des Sensors vornehmen zu können. Es ist jedoch auch denkbar, die Lagebestimmung, beispielsweise zu Kontrollzwecken, auch während des Transportes des fotografischen Materials am Sensor vorbei durchzuführen.

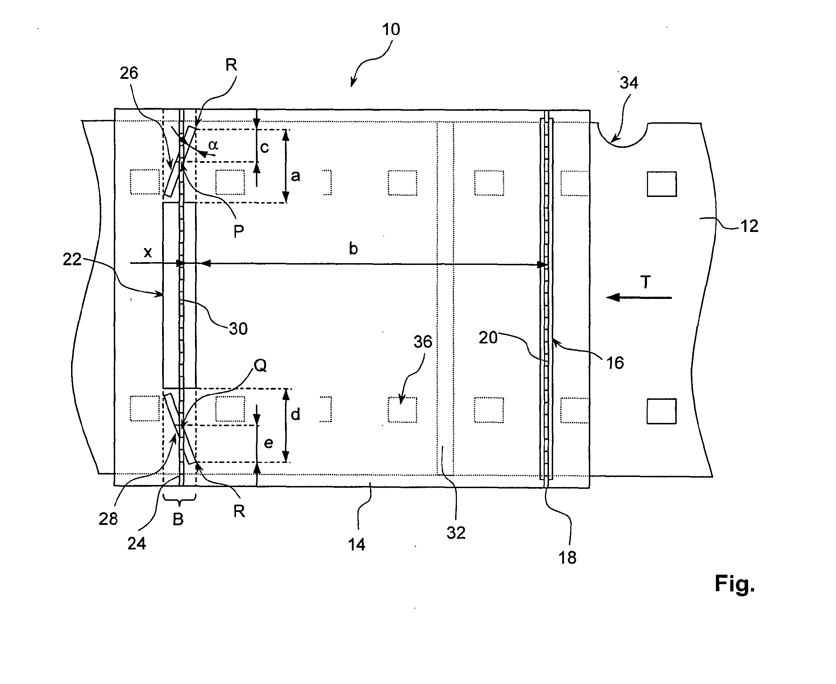

Weitere Merkmale und Vorteile der Erfindung ergeben sich aus der folgenden Beschreibung einer bevorzugten Ausführungsform, wobei Bezug auf die beigefügte Zeichnung genommen wird.

Es zeigt die einzige Figur in schematischer Darstellung eine Unteransicht unter eine erfindungsgemäße Anordnung zum Bestimmen des Antriebsverhaltens eines Transportsystems für fotografisches Material in einer Verarbeitungsstation.

In der einzigen Figur ist in Unteransicht eine erfindungsgemäße Anordnung 10 in schematischer Darstellung gezeigt, mit der das Antriebsverhalten eines Transportsystems für ein fotografisches Material 12 durch eine Verarbeitungsstation bestimmt werden kann.

Die Anordnung 10 weist eine lichtundurchlässige Auflage 14 auf, entlang der das fotografische Material 12 in eine vorgegebene Transportrichtung T von dem Transportsystem zu fördern ist. An der Auflage 14 ist ein quer zur Transportrichtung T verlaufender erster Meßspalt 16 ausgebildet, der sich zumindest annähernd über die gesamte Breite der Auflage 14 erstreckt. Mittig zum Meßspalt 16 ist eine erste CCD-Zeile 18 aus einer Vielzahl nebeneinander angeordneter CCD-Elemente 20 befestigt, die sich über die gesamte Breite der Auflage 14 erstreckt.

In Transportrichtung T dem ersten Meßspalt 16 nachgeordnet ist an der Auflage 14 ein zweiter Meßspalt 22 mit einer Breite B vorgesehen, der sich gleichfalls quer zur Transportrichtung T des fotografischen Materials 12 erstreckt, jedoch nur etwa die Hälfte der Breite der Auflage 14 quer zur Transportrichtung T einnimmt und mittig an dieser ausgebildet ist. Am zweiten Meßspalt 22 ist eine zweite CCD-Zeile 24 vorgesehen, die in ihrem Aufbau dem Aufbau der ersten CCD-Zeile 18 entspricht.

Die beiden CCD-Zeilen 18 und 24 dienen als Sensoren einer Meßanordnung mit der der Transport des fotografischen Materials 12 entlang der Auflage 14 überwacht werden soll, wie später noch detailliert erläutert wird. Zu diesem Zweck ist gegenüber jeder CCD-Zeile 18 bzw. 24 über der diesen abgewandten Fläche der Auflage 14 jeweils eine Zeilenbeleuchtung angeordnet, die durch das auf der Auflage 14 an den CCD-Zeilen 18 und 24 vorbeigeführte fotografische Material 12 in die diesen jeweils gegenüber angeordneten Meßspalte 16 bzw. 22 einstrahlen und die CCD-Zeilen 18 und 24 beleuchten, um Helligkeitsunterschiede an dem fotografischen Material 12 zu erfassen.

Nahe den beiden Enden des zweiten Meßspaltes 22 ist jeweils ein Kalibrierspalt 26 bzw. 28 an der lichtundurchlässigen Auflage 14 ausgebildet, der unter einem vorgegebenen Winkel α bezogen auf die Transportrichtung T verläuft. Die beiden Kalibrierspalte 26 und 28 sind dabei spiegelsymmetrisch bezogen auf die Mitte der Auflage 14 angeordnet. Der Winkel α, mit dem die Kalibrierspalte 26 und 28 verlaufen, ist so gewählt, dass die Kalibrierspalte 26 und 28 einen Bereich in Transportrichtung T abdecken, der der Breite B des zweiten Meßspaltes 22 entspricht. Die in Transportrichtung T gesehen führende Ecke des vorgeordneten Endes jedes der beiden Kalibrierspalte 26 und 28 ist als Referenzpunkt R definiert, der in Transportrichtung T gesehen einen vorgegebenen Abstand b zum ersten Meßspalt 16 und damit zur ersten CCD-Zeile 18 besitzt. Des weiteren besitzt der Referenzpunkt R jedes Kalibrierspaltes 26 bzw. 28 einen vorgegebenen Abstand a bzw. einen Abstand d quer zur Transportrichtung T zu dem dem jeweiligen Kalibrierspalt 26 bzw. 28 zugewandten Ende des Meßspaltes 22.

Um die relative Lage x der zweiten CCD-Zeile 24 zum Kalibrierspalt 26 bzw. 28 in Transportrichtung T gesehen zu ermitteln, wird die zweite CCD-Zeile 24 mit der Zeilenbeleuchtung beleuchtet, wobei insbesondere die im Bereich der beiden Kalibrierspalte 26 und 28 positionierten Abschnitte der CCD-Zeile 24 ausgewertet werden.

Dadurch, dass der Kalibrierspalt 26 bzw. 28 jeweils nur einen kleinen Abschnitt der CCD-Zeile 24 freiläßt, werden nur die CCD-Elemente 30 der CCD-Zeile 24 von der nicht dargestellten Zeilenbeleuchtung beleuchtet, die vom Kalibrierspalt 26 bzw. 28 und vom zweiten Meßspalt 22 freigelassen sind. Anschließend wird von einer nicht dargestellten Steuerung das CCD-Element 30 der CCD-Zeile 24, das im Bereich des ersten Kalibrierspaltes 26 angeordnet ist und den größten Helligkeitswert angibt, als Punkt P definiert. In gleicher Weise wird bei dem zweiten Kalibrierspalt 28 ein Punkt Q definiert. Anhand des Punktes P bzw. des Punktes Q wird nun der Abstand c des Punktes P sowie der Abstand e des Punktes Q quer zur Transportrichtung T betrachtet ermittelt. Anschließend wird unter Verwendung der folgenden trigonometrischen Formel die relative Lage x zum Referenzpunkt R bestimmt:

$$x = c \cdot \tan \alpha \quad \text{oder} \quad x = e \cdot \tan \alpha \qquad (1)$$

Alternativ kann die relative Lage x auch bestimmt werden durch die trigonometrische Formel:

$$x = (a - |c-d|) \cdot \tan \alpha \qquad (2)$$

Die so ermittelte relative Lage x der zweiten CCD-Zeile 24 in Transportrichtung T betrachtet wird anschließend zu dem vorgegebenen Abstand b addiert, so dass sich für die tatsächliche Transportstrecke die Gesamtlänge b + x ergibt.

Anhand dieser präzisen Längenangabe der Transportstrecke zwischen den beiden CCD-Zeilen 18 und 24 wird nun das Antriebsverhalten des Transportsystemes bestimmt. Zu diesem Zweck wird ein am fotografischen Material 12 vorgesehenes Referenzmerkmal ausgewählt. Hierzu eignet sich beispielsweise eine Klebestelle 32 zwischen den Enden zweier aneinander geklebter Abschnitte des fotografischen Materials 12 oder das fotografische Material 12 ist an einer vorgegeben Stelle mit einer Kerbe 32 versehen. Handelt es sich bei dem fotografischen Material 12 um einen entwickelten Film, würden sich auch die Transportperforation 34 bedingt eignen. Allerdings besteht hier die Gefahr, dass durch Verformungen an der Transportperforation 34, die häufig gegeben sind, eine exakte Ermittlung des einzelnen Perforationsloches nur eingeschränkt möglich ist.

Zum Bestimmen des Antriebsverhaltens wird das fotografische Material 12 an den beiden CCD-Zeilen 18 und 24 in Transportrichtung T vorbeigeführt, wobei beispielsweise die zuvor angesprochene Klebestelle 32 von den beiden CCD-Zeilen 18 und 24 aufeinanderfolgend erfasst wird. Dabei wird gleichzeitig das Antriebsverhalten des Transportsystems überwacht, beispielsweise die Anzahl der einzelnen Schrittsignale zum Betätigen eines als Antrieb für das Transportsystem dienenden Schrittmotors. Durch das aufeinanderfolgende Erfassen der Klebestelle 32 von den beiden CCD-Zeilen 18 und 24, deren Abstand b + x vorab in der erfindungsgemäßen Weise exakt bestimmt wurde, sowie das Ermitteln der Anzahl an Steuersignale für den Antrieb, die erforderlich waren, um das fotografische Material 12 exakt diese vorgegebene, als Referenz dienende Transportstrecke b + x zwischen den beiden CCD-Zeilen 18 und 24 zu transportieren ist nun das Antriebsverhalten des Transportsystemes bekannt.

Auf Grundlage des so ermittelten Antriebsverhalten, kann das fotografische Material 12 nun ordnungsgemäß und mit hoher Präzision durch die Verarbeitungsstation intermittierend gefördert werden.

**Patentansprüche**

1. Anordnung zum Bestimmen des Antriebsverhaltens eines Transportsystems für ein fotografisches Material, insbesondere für einen entwickelten Film, in einer Verarbeitungsstation anhand einer als Referenz dienenden Transportstrecke (b+x) zwischen zwei in Transportrichtung (T) des fotografischen Materials (12) aufeinanderfolgend angeordneten Sensoren (18, 24) zum Erfassen eines Referenzmerkmales (32, 34) an dem an den beiden Sensoren (18, 24) vorbeizuführenden fotografischen Material (12),
**dadurch gekennzeichnet, dass** für einen der beiden Sensoren (24) mindestens ein unter einem vorgegebenen Winkel (α) zur Transportrichtung (T) verlaufender Kalibrierspalt (26) vorgesehen ist, der den diesem zugeordneten Sensor (24) abschnittsweise freiläßt und einen definierten Abstand (b) zum anderen Sensor (18) besitzt, und
dass der von dem Kalibrierspalt (26) freigelassene Abschnitt (P) des Sensors (24) die relative Lage (x) des Sensors (24) zum Kalibrierspalt (26) in Transportrichtung (T) angibt, wobei die relative Lage (x) des Sensors (24) zum Kalibrierspalt (26) gemeinsam mit dem Abstand (b) des Kalibrierspaltes (26) zum anderen Sensor (18) die als Referenz dienende Transportstrecke (b+x) definiert.

2. Anordnung nach Anspruch 1, **dadurch gekennzeichnet, dass** sich beide Sensoren (18, 24) zumindest annähernd über die gesamte Breite des Transportweges (14) des fotografischen Materials (12) erstrecken.

3. Anordnung nach Anspruch 1 oder 2, **dadurch gekennzeichnet, dass** ein zweiter Kalibrierspalt (28) vorgesehen ist, welcher vorzugsweise spiegelsymmetrisch bezüglich der Mitte des Transportweges (14) zum ersten Kalibrierspalt (26) ausgebildet ist, wobei auch die relative Lage des Sensors (24) zum zweiten Kalibrierspalt (28) beim Bestimmen der als Referenz dienenden Transportstrecke (b+x) heranzuziehen ist.

4. Anordnung nach einem der Ansprüche 1 bis 3, **dadurch gekennzeichnet, dass** der Kalibrierspalt (26) bzw. die Kalibrierspalte (26, 28) an einer lichtundurchlässigen Auflage (14) für das fotografische Material (12) ausgebildet sind.

5. Anordnung nach einem der Ansprüche 1 bis 4, **dadurch gekennzeichnet, dass** die Sensoren (18, 24) das fotografische Material (12) durch quer zur Transportrichtung (T) des fotografischen Materials (12) verlaufende Meßspalte (16, 22) erfassen, die an einer als Transportweg dienenden lichtundurchlässigen Auflage (14) für das fotografische Material (12) ausgebildet sind.

6. Anordnung nach Anspruch 5, **dadurch gekenn-**

**zeichnet, dass** einer der Meßspalte (22) in Transportrichtung (T) des fotografischen Materials (12) gesehen auf Höhe des Kalibrierspaltes (26) bzw. der Kalibrierspalte (26, 28) ausgebildet ist, sich über den vom Kalibrierspalt (26) bzw. den Kalibrierspalten (26, 28) in Transportrichtung (T) abgedeckten Bereich (B) in seiner Breite erstreckt und durch den der Sensor (24) das Referenzmerkmal (32, 34) am fotografischen Material (12) erfasst.

7. Anordnung nach einem der Ansprüche 1 bis 6, **dadurch gekennzeichnet, dass** die Sensoren CCD-Zeilen (18, 24) aus mehreren CCD-Elementen (20, 30) sind, die sich über die gesamte Breite des Transportweges (14) erstrecken, und dass gegenüber jeder CCD-Zeile (18, 24) eine Beleuchtungseinheit angeordnet ist, zwischen der und der dieser jeweils zugeordneten CCD-Zeile (18, 24) das fotografische Material (12) hindurchzuführen ist.

8. Anordnung nach einem der vorhergehenden Ansprüche, **dadurch gekennzeichnet, dass** als Referenzmerkmal des fotografischen Materials (12) eine Klebestelle (32) zwischen zwei aneinandergeklebten Abschnitten des Materials (12) oder eine Kerbe (34) dient.

9. Verfahren zum Bestimmen des Antriebsverhaltens eines Transportsystems für ein fotografisches Material, insbesondere für einen entwickelten Film, in einer Verarbeitungsstation anhand einer als Referenz dienenden Transportstrecke (b+x) zwischen zwei in Transportrichtung (T) des fotografischen Materials (12) gesehen aufeinanderfolgend angeordneten Sensoren (18, 24), bei dem das fotografische Material (12) an den beiden Sensoren (18, 24) vorbeigeführt wird, wobei die Sensoren (18, 24) ein an dem fotografischen Material (12) vorgesehenes Referenzmerkmal (32, 34) erfassen, **dadurch gekennzeichnet, dass** für einen der beiden Sensoren (24) mindestens ein unter einem vorgegebenen Winkel ($\alpha$) zur Transportrichtung (T) verlaufender Kalibrierspalt (26) vorgesehen ist, der den diesem zugeordneten Sensor (24) abschnittsweise freiläßt und einen definierten Abstand (b) zum anderen Sensor (18) besitzt, und dass die relative Lage (x) des von dem Kalibrierspalt (26) freigelassenen Abschnitts (P) des Sensors (24) erfasst wird, wobei die relative Lage (x) des Sensors (24) zum Kalibrierspalt (26) gemeinsam mit dem Abstand (b) des Kalibrierspaltes (26) zum anderen Sensor (18) die als Referenz dienende Transportstrecke (b+x) definiert.

10. Verfahren nach Anspruch 9, **dadurch gekennzeichnet, dass** zum Bestimmen der relativen Position des Sensors (24) zum Kalibrierspalt (26) der vom Kalibrierspalt (26) unbedeckte Abschnitt (P) des Sensors (24) erfasst, der Abstand (c) des erfassten unbedeckten Abschnittes (P) des Sensors (24) bezogen auf einen Referenzpunkt (R) bestimmt und basierend auf dem vorgegebenen Winkel ($\alpha$) des Kalibrierspaltes (26) die relative Lage (x) des Sensors (24) in Transportrichtung (T) bezogen auf den Referenzpunkt (R) berechnet wird.

11. Verfahren nach Anspruch 9 oder 10, **dadurch gekennzeichnet, dass** der Referenzpunkt (R) durch eines der beiden Enden des Kalibrierspaltes (26) definiert ist.

12. Verfahren nach einem der Ansprüche 9, 10 oder 11, **dadurch gekennzeichnet, dass** ein zweiter Kalibrierspalt (28) vorgesehen ist, welcher in Transportrichtung (T) gesehen auf Höhe des ersten Kalibrierspaltes (26) angeordnet ist und an dem gemeinsam mit dem ersten Kalibrierspalt (26) die relative Lage (x) des Sensors (24) zum Referenzpunkt (R) bestimmt wird.

13. Verfahren nach einem der Ansprüche 9 bis 12, **dadurch gekennzeichnet, dass** der am Kalibrierspalt (26) bzw. an den Kalibrierspalten (26, 28) positionierte Sensor eine sich über die gesamte Breite des Transportweges (14) erstreckende CCD-Zeile (24) ist und dass zum Bestimmen der relativen Lage (x) der CCD-Zeile (24) zum Referenzpunkt (R) die CCD-Zeile (24) durch den Kalibrierspalt (26) bzw. durch die Kalibrierspalte (26, 28) belichtet wird.

Fig.

EP 1 403 693 A1

EP 1 403 693 A1

**Europäisches Patentamt**

# EUROPÄISCHER RECHERCHENBERICHT

Nummer der Anmeldung

EP 02 02 1169

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 987 440 A (BENKER GERHARD ET AL) 22. Januar 1991 (1991-01-22) * Anspruch 1; Abbildung 1 * --- | 1-13 | G03B1/14 G03D3/13 |
| A | EP 0 829 751 A (NORITSU KOKI CO LTD) 18. März 1998 (1998-03-18) * Zusammenfassung; Abbildung 1 * --- | 1-13 | |
| A | US 4 922 276 A (LAMPRECHT PHILIPP ET AL) 1. Mai 1990 (1990-05-01) * Anspruch 1; Abbildung 1 * ----- | 1,9 | |

RECHERCHIERTE SACHGEBIETE (Int.Cl.7)

G03B
G03D

Der vorliegende Recherchenbericht wurde für alle Patentansprüche erstellt

| Recherchenort | Abschlußdatum der Recherche | Prüfer |
|---|---|---|
| DEN HAAG | 25. Februar 2003 | Romeo, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**　　　　EP 02 02 1169

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2003

| Im Recherchenbericht angeführtes Patentdokument | Datum der Veröffentlichung | Mitglied(er) der Patentfamilie | Datum der Veröffentlichung |
|---|---|---|---|
| US 4987440 A | 22-01-1991 | DE 3833731 A1 | 05-04-1990 |
| | | CH 679808 A5 | 15-04-1992 |
| | | JP 2137849 A | 28-05-1990 |
| | | JP 2664496 B2 | 15-10-1997 |
| EP 0829751 A | 18-03-1998 | JP 10090802 A | 10-04-1998 |
| | | EP 0829751 A2 | 18-03-1998 |
| | | US 5861943 A | 19-01-1999 |
| US 4922276 A | 01-05-1990 | IT 1224924 B | 29-10-1990 |
| | | AT 100949 T | 15-02-1994 |
| | | DE 58906803 D1 | 10-03-1994 |
| | | EP 0352720 A2 | 31-01-1990 |
| | | JP 2068553 A | 08-03-1990 |
| | | JP 2851308 B2 | 27-01-1999 |

Für nähere Einzelheiten zu diesem Anhang : siehe Amtsblatt des Europäischen Patentamts, Nr.12/82